# EUROPÄISCHE PATENTSCHRIFT

(11) **EP 3 312 907 B1**
(45) Veröffentlichungstag und Bekanntmachung des Hinweises auf die Patenterteilung: **22.05.2019**
(21) Anmeldenummer: 17194737.7
(22) Anmeldetag: 04.10.2017
(51) Int. Cl.: H01M 2/34, H02J 7/00

(54) **KURZSCHLUSSSCHALTER, SCHNELLENTLADEEINHEIT, BATTERIEZELLE UND ARBEITSVORRICHTUNG**
SHORT CIRCUIT SWITCH, FAST DISCHARGING UNIT, BATTERY CELL AND WORKING APPARATUS
OBTURATEUR À GUILLOTINE, UNITÉ DE DÉCHARGEMENT RAPIDE, ÉLÉMENT DE BATTERIE ET DISPOSITIF DE TRAVAIL

(30) Priorität: 20.10.2016 DE 102016220552
(43) Veröffentlichungstag der Anmeldung: 25.04.2018
(73) Patentinhaber: Robert Bosch GmbH, 70442 Stuttgart (DE)
(72) Erfinder: Mansfeld, Sebastian, 71272 Renningen (DE); Noll, Stefan, 71034 Boeblingen (DE); Schwaiger, Stephan, 71229 Leonberg (DE); Schelling, Christoph, 70619 Stuttgart (DE); Grieb, Michael, 71272 Renningen-Malmsheim (DE); Banzhaf, Christian Tobias, 89150 Laichingen (DE); Kenntner, Johannes, 71106 Magstadt (DE)

(56) Entgegenhaltungen:
- EP-A2- 0 982 830
- EP-A2- 2 642 582
- DE-A1-102015 205 153

## Beschreibung

### Stand der Technik

Die vorliegende Erfindung betrifft einen Kurzschlussschalter, eine Schnellentladeeinheit, eine Batteriezelle und eine Arbeitsvorrichtung. Die vorliegende Erfindung betrifft insbesondere einen Kurzschlussschalter als Entladeschalter einer Schnellentladeeinheit einer Batteriezelle, eine Schnellentladeeinheit für eine Batteriezelle als solche sowie ein Fahrzeug mit einer mit einer Schnellentladeeinheit ausgestatteten Batteriezelle.

Insbesondere im Fahrzeugbereich finden batteriebetriebene Aggregate verbreitet Einsatz. Ein wesentlicher Aspekt der zu Grunde liegenden Batterietechnik ist die Steigerung der Effizienz unter gleichzeitiger Wahrung einer größtmöglichen Sicherheit des Betriebs. Dem Sicherheitsaspekt wird durch die Verwendung so genannter Schnellentladeeinheiten Rechnung getragen, die in einem Havariefall die Zellanschlüsse einer zu Grunde liegenden Batterie kurzschließen und damit die weitere Energieversorgung unterbrechen.

Bei herkömmlichen Schnellentladeeinheiten verwendete Kurzschlussschalter sind auf Grund der notwendigen Stromtragfähigkeit vergleichsweise kompliziert und aus einer Mehrzahl Komponenten mit vergleichsweise hohen Kosten und merklichem Bauraum aufgebaut, insbesondere durch die Verwendung einer Vielzahl parallel geschalteter MOSFETs. Die Dokumente EP2 642 582 und EP0 982 830 offenbarten elektrische Überbrückungseinheiten für Batterien.

### Offenbarung der Erfindung

Der erfindungsgemäße Kurzschlussschalter mit den Merkmalen des unabhängigen Anspruches 1 weist demgegenüber den Vorteil auf, dass mit einem vergleichsweise geringen apparativen und wenig kostenintensiven Aufwand ein hohes Maß an Sicherheit erreicht wird. Dies wird erfindungsgemäß mit den Merkmalen des unabhängigen Anspruches 1 dadurch erreicht, dass ein Kurzschlussschalter, insbesondere als Entladeschalter einer Schnellentladeeinheit einer Batteriezelle, geschaffen wird, welcher ausgebildet ist mit einem ersten Kontaktelement und einem zweiten Kontaktelement, welche so relativ zueinander beweglich sind, dass durch sie ein erster Zustand voneinander elektrisch getrennt und ein zweiter Zustand in elektrischem Kontakt miteinander einnehmbar ist, einem Opfermaterial, welches unter Wärmeeinwirkung thermisch zersetzbar ist, einem Heizelement, welches sich in thermischem Kontakt mit dem Opfermaterial befindet. Dabei ist das Opfermaterial so ausgebildet, dass es im Übergang von einem thermisch nicht zersetzten Zustand zu einem thermisch zersetzten Zustand einen elektrischen Kontakt zwischen dem ersten und dem zweiten Kontaktelement durch deren Bewegung relativ zueinander bewirkt oder ermöglicht. Es ist somit eine Kernidee der vorliegenden Erfindung, das thermische Zersetzen eines Opfermaterials zum Erzeugen eines elektrischen Kontakts in einem Kurzschlussschalter zu nutzen.

Die Unteransprüche zeigen bevorzugte Weiterbildungen der Erfindung.

Für die Funktionalität des erfindungsgemäßen Kurzschlussschalters sind die ersten und zweiten Kontaktelemente dazu ausgebildet, im Betrieb mit ersten und zweiten Anschlüssen einer zu Grunde liegenden Batteriezelle oder eines Batteriemoduls kontaktierbar zu sein. Im Betrieb ist also jedes der Kontaktelemente mit jeweils einem der Anschlüsse der Batterie verbunden. Im Havariefall wird das Heizelement in gesteuerter Art und Weise betätigt, um durch den thermischen Kontakt mit dem Opfermaterial dieses thermisch zu zersetzen, wodurch der elektrische Kontakt zwischen dem ersten und dem zweiten Kontaktelement und mithin der Kurzschluss zwischen den Batterieanschlüssen ausgelöst wird.

Grundsätzlich können sämtliche Materialien dem Opfermaterial zu Grunde gelegt werden oder dieses bilden, sofern in einem normalen Betriebszustand ohne höheres thermisches Aufkommen das zu Grunde gelegte Material in einem thermisch nicht zersetzten Zustand verbleibt, sich in einem Fehlerfall bei höherem thermischen Aufkommen jedoch thermisch zersetzt, um so erfindungsgemäß den Kurzschluss auszulösen.

Bei einer vorteilhaften Weiterbildung des erfindungsgemäßen Kurzschlussschalters enthält das Opfermaterial ein thermisch zersetzbares Polymer, insbesondere ein Polyolefin, oder wird von einem derartigen Material gebildet.

Um die Funktionalität des Kurzschlussschalters im Normalfall zu gewährleisten ist es von besonderem Vorteil, wenn das Opfermaterial - zumindest im thermisch nicht zersetzten Zustand - elektrisch isolierend oder elektrisch höchstens schlecht leitend ist, also eine geringe elektrische Leitfähigkeit besitzt, insbesondere im Vergleich zur elektrischen Leitfähigkeit der ersten und zweiten Kontaktelemente.

Um die Funktionalität des erfindungsgemäßen Kurzschlussschalters weiter zu gewährleisten, nämlich durch Ausnutzen der thermischen Zersetzbarkeit des Opfermaterials, können verschiedene Geometrien in der Anordnung der Kontaktelemente in Beziehung zum Opfermaterial vorgesehen sein.

Geometrisch besonders einfache Verhältnisse stellen sich ein, wenn gemäß einer bevorzugten Ausgestaltungsform des erfindungsgemäßen Kurzschlussschalters die Kontaktelemente - zum Beispiel durch ihre Geometrie und/oder die Art ihrer Anordnung - eingerichtet sind, beim Übergang des Opfermaterials in den thermisch zersetzten Zustand einen mittelbaren oder einen unmittelbaren mechanischen Kontakt miteinander auszubilden, um dadurch den elektrischen Kontakt zu bewirken.

Dies kann in vielfältiger Weise realisiert werden.

Eine besonders einfache Anordnung ergibt sich, wenn das Opfermaterial im thermisch nicht zersetzten Zustand eine materielle und damit räumliche Barriere zwischen dem ersten und dem zweiten Kontaktelement bildet und wenn eine Vorspanneinrichtung ausgebildet ist, welche zur Beaufschlagung des ersten Kontaktelements und/oder des zweiten Kontaktelements mit einer Kraft in Richtung auf das jeweils andere Kontaktelement zu eingerichtet ist, insbesondere mit einem oder mit mehreren Federelementen.

Das bedeutet im Betrieb des erfindungsgemäßen Kurzschlussschalters, dass zwischen den Kontaktelementen das Opfermaterial vorliegt und somit einem mechanischen und damit elektrischen Kontakt der Kontaktelemente im Wege steht. Im Fehlerfall, nach Aktivierung des Heizelements und mithin mit Verschwinden des Opfermaterials durch dessen thermische Zersetzung ist die Barriere zwischen den Kontaktelementen entfernt, wodurch die Kraftbeaufschlagung der Kontaktelemente durch die Vorspanneinrichtung ihre Wirkung entfaltet. Die Kontaktelemente werden aufeinander zu geschoben und treten mittelbar oder unmittelbar in mechanischen und dadurch in elektrischen Kontakt miteinander, wodurch der Schaltvorgang und somit der Kurzschluss realisiert werden.

An dem Opfermaterial als Barriere können sich im thermisch nicht zersetzten Zustand die Kontaktelemente direkt mechanisch abstützen. Dies ist jedoch nicht zwingend, es können vielmehr andere Geometrien vorgesehen sein, die ein direktes Abstützen der Kontaktelemente am Opfermaterial als Barriere nicht erfordern.

Alternativ zum Barriereprinzip kann das Opfermaterial mit oder aus einem Explosivstoff gebildet sein und so an einer Fläche mindestens eines der Kontaktelemente ausgebildet sein, welche vom jeweils anderen Kontaktelement abgewandt ist, dass beim Übergang vom thermisch nicht zersetzten Zustand des Opfermaterials zum thermisch zersetzten Zustand die Kontaktelemente durch Rückstoß relativ aufeinander zu bewegt und elektrisch kontaktiert werden.

Auch bei der Ausgestaltung des Heizelements können verschiedene Prinzipien zu Grunde gelegt werden, solange die Heizfunktion des Heizelements in Abhängigkeit vom Vorliegen eines normalen Betriebs oder eines Havariefalls steuerbar ist.

Besonders einfache Verhältnisse stellen sich ein, wenn gemäß einer vorteilhaften Weiterbildung des erfindungsgemäßen Kurzschlussschalters das Heizelement einen MOSFET aufweist oder von einem MOSFET gebildet wird, dessen Sourceanschluss mit einem der Kontaktelemente und dessen Drainanschluss mit dem anderen der Kontaktelemente elektrisch kontaktiert ist. Im Betrieb des erfindungsgemäßen Kurzschlussschalters sind die ersten und zweiten Kontaktelemente einem ersten bzw. einem zweiten Anschluss einer Batterie oder Batteriezelle verbunden. Über die Verbindung des Sourceanschlusses und des Drainanschlusses mit dem ersten bzw. dem zweiten Kontaktelement fließt im nicht durchgeschalteten Zustand des MOSFETs - also im Normalbetrieb - ein nur geringer Leckstrom, der keine Heizwirkung entfaltet. Im Havariefall wird extern der Gateanschluss als Steueranschluss des MOSFETs maximal durchgeschaltet, es fließt die maximale Stromlast mit einem entsprechenden thermischen Budget zum Aufheizen des Opfermaterials zu dessen thermischer Zersetzung.

Eine Vereinfachung des Aufbaus des erfindungsgemäßen Kurzschlussschalters im Hinblick auf die Struktur des Heizelements ergibt sich, wenn das Heizelement ein elektrisch leitendes Element aufweist oder von einem solchen Element gebildet wird, insbesondere als metallisches Heizelement, zum Beispiel nach Art eines Heizdrahtes, einer Heizwendel, einer Heizschlaufe oder dergleichen oder einer Mehrzahl davon, welches in einem Zwischenraum zwischen den Kontaktelementen angeordnet ist und welches insbesondere im thermisch nicht zersetzten Zustand des Opfermaterials im Opfermaterial eingebettet ist.

Ferner betrifft die vorliegende Erfindung eine Schnellentladeeinheit für eine Batteriezelle. Erfindungsgemäß ist der bei der Schnellentladeeinheit vorgesehene Entladeschalter als Kurzschlussschalter gemäß der vorliegenden Erfindung ausgebildet. Der Entladeschalter und somit der Kurzschlussschalter sind eingerichtet - z.B. über erste und zweite Entladeleitungen - mit ersten und zweiten Anschlüssen einer Batteriezelle verbunden zu werden oder zu sein.

Das bedeutet, wie oben bereits erwähnt wurde, dass zwischen den ersten und zweiten Anschlüssen einer Batterie die Schnellentladeeinheit und insbesondere der Entladeschalter in Form des erfindungsgemäßen Kurzschlussschalters kontaktiert ist. Im Normalfall, d.h. im normalen Betrieb ohne Havarie, werden die Anschlüsse der Batterie dadurch elektrisch nicht direkt verbunden. Im Havariefall jedoch wird das Heizelement des erfindungsgemäßen Kurzschlussschalters als Entladeschalter der Schnellentladeeinheit derart angesteuert, dass das Opfermaterial aufgeheizt und in den thermisch zersetzten Zustand überführt wird. Als Folge davon wird der Kurzschlussschalter geschlossen und die Anschlüsse der Batterie werden direkt miteinander kontaktiert und kurzgeschlossen, gegebenenfalls unter Zwischenschaltung eines Entladewiderstands.

Gemäß einem anderen Aspekt der vorliegenden Erfindung wird eine Batteriezelle geschaffen. Diese weist einen ersten Anschluss und einen zweiten Anschluss auf, zwischen denen eine erfindungsgemäße Schnellentladeeinheit ausgebildet ist, um einen steuerbaren elektrischen Kontakt zwischen dem ersten und dem zweiten Anschluss der Batteriezelle auszubilden.

Ferner ist Gegenstand der vorliegenden Erfindung eine Arbeitsvorrichtung und insbesondere ein Fahrzeug. Die Arbeitsvorrichtung und insbesondere das Fahrzeug ist mit einem Aggregat zum Ausführen eines bestimmten Arbeitsvorgangs ausgebildet. Dabei kann es sich zum Beispiel um einen Antrieb handeln. Des Weiteren ist mindestens eine Batteriezelle oder zum Beispiel ein Batteriemodul mit einer Mehrzahl von Batteriezellen ausgebildet. Die Batteriezelle oder das Modul dienen der Versorgung des mindestens einen Aggregats mit elektrischer Energie, um dessen Betrieb zu gewährleisten. Eine jeweils vorgesehene Batteriezelle besitzt dabei den vorgestellten erfindungsgemäßen Aufbau.

### Kurzbeschreibung der Figuren

Unter Bezugnahme auf die beigefügten Figuren werden Ausführungsformen der Erfindung im Detail beschrieben.
- Figur 1: ist eine schematische Darstellung einer Ausführungsform der erfindungsgemäßen Batteriezelle.
- Figuren 2 bis 8: sind schematische Darstellungen von Ausführungsformen des erfindungsgemäßen Kurzschlussschalters, gegebenenfalls in verschiedenen Betriebszuständen.

Bevorzugte Ausführungsformen der Erfindung sind durch die abhängigen Ansprüche definiert.

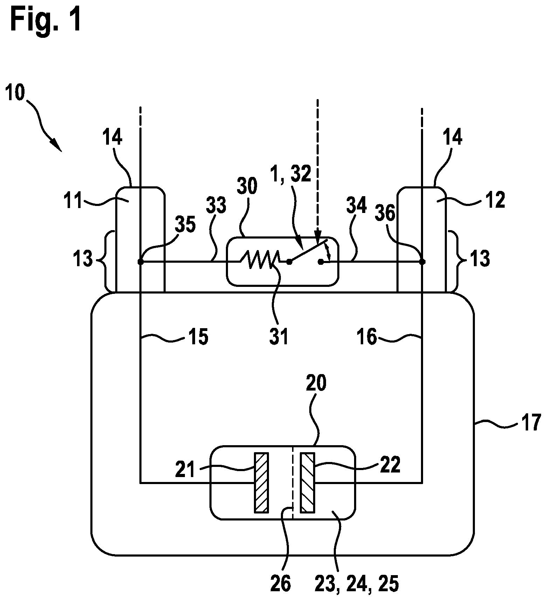

Nachfolgend werden unter Bezugnahme auf die Figuren 1 bis 8 Ausführungsbeispiele und der technische Hintergrund der Erfindung im Detail beschrieben. Gleiche und äquivalente sowie gleich oder äquivalent wirkende Elemente und Komponenten werden mit denselben Bezugszeichen bezeichnet. Nicht in jedem Fall ihres Auftretens wird die Detailbeschreibung der bezeichneten Elemente und Komponenten wiedergegeben.

Die dargestellten Merkmale und weiteren Eigenschaften können in beliebiger Form voneinander isoliert und beliebig miteinander kombiniert werden, ohne den Kern der Erfindung zu verlassen.

Figur 1 zeigt in schematischer Darstellung eine Ausführungsform der erfindungsgemäßen Batteriezelle 10 unter Verwendung einer Ausführungsform des erfindungsgemäßen Kurzschlussschalters 1 als Entladeschalter 32 einer für die Batteriezelle 10 vorgesehenen Schnellentladeeinheit 30.

Die erfindungsgemäße Batteriezelle 10 wird im Kern gebildet von einem elektrochemischen Teil 20 zur Erzeugung elektrischer Energie aus chemischer Energie über elektrochemische Prozesse. Dazu weist der elektrochemische Teil 20 eine erste oder positive Elektrode 21 und eine zweite oder negative Elektrode 22 auf, die in einem Gefäß eingebettet sind, welches eine Elektrolytkomponente 23 mit einer Salzkomponente 24 und mit einer Lösungsmittelkomponente 25 aufweist.

Der elektrochemische Teil 20 und insbesondere die ersten und zweiten Elektroden 21 und 22 sind zum Ableiten der erzeugten elektrischen Energie mit Anschlussleitungen 15 bzw. 16 aus einem Gehäuse 17 heraus verbunden. Die Anschlussleitungen 15, 16 enden in einem ersten Anschluss 11 bzw. zweiten Anschluss 12 der Batteriezelle 10 und unterteilen sich jeweils in einen externen Bereich 14 zum äußeren Anschließen und einen Verbindungsbereich 13 zum Kontaktieren der vorgesehenen erfindungsgemäßen Schnellentladeeinheit 30.

Die Schnellentladeeinheit 30 der Batteriezelle 10 kontaktiert über Entladeleitungen 33 und 34, die an Verbindungsknoten 35 und 36 an den Anschlussleitungen 15 und 16 im Bereich der ersten und zweiten Anschlüsse 11 und 12 angeschlossen sind, den Entladeschalter 32, gegebenenfalls unter Zwischenschaltung eines Entladewiderstands 31, mit den Anschlüssen 11 und 12 der Batteriezelle 10.

Dabei wird als Entladeschalter 32 ein erfindungsgemäß aufgebauter Kurzschlussschalter 1 eingesetzt.

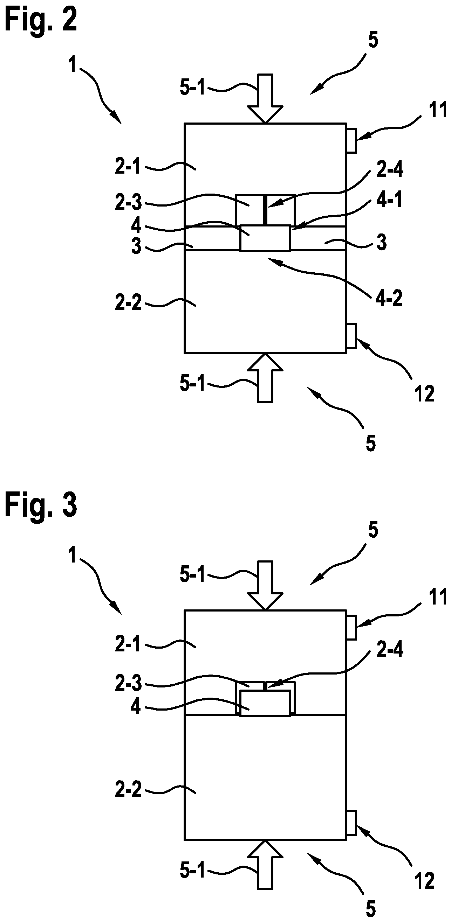

Die verschiedenen Ausgestaltungsformen und Funktionsweisen derartig erfindungsgemäß aufgebauter Kurzschlussschalter 1 werden im Zusammenhang mit den weiteren Figuren 2 bis 8 erläutert.

Die Figuren 2 und 3 zeigen dabei in geschnittener Seitenansicht in schematischer Form eine erste Ausgestaltung des ordnungsgemäßen Kurzschlussschalters 1, nämlich im Normalzustand gemäß Figur 2 im Fehlerzustand eines Havariefalls gemäß Figur 3

Der erfindungsgemäße Kurzschlussschalter 1 besteht bei dieser Ausgestaltungsform aus einem ersten Kontaktelement 2-1 und einem zweiten Kontaktelement 2-2, welche zueinander räumlich beabstandet sind, wobei der räumliche Abstand durch ein zwischen den Kontaktelementen 2-1, 2-2 vorliegendes Opfermaterial 3 gewährleistet wird. Das Opfermaterial 3 dient somit als Barriere zwischen den einander zugewandten Stirnseiten der ersten und zweiten Kontaktelemente 2-1, 2-2, die sich auf Grund der Kräfte 5-1, die durch die Vorspanneinrichtung 5 auf die Kontaktelemente 2-1, 2-2 aufeinander zu gerichtet ausgeübt werden, hier direkt am Opfermaterial 3 mechanisch abstützen.

Das erste Kontaktelement 2-1, in den Figuren 2 und 3 oben dargestellt, besitzt eine Ausnehmung 2-3, die so gewählt ist, dass das zentral im Opfermaterial 3 gemäß Figur 2 eingebettete Heizelement 4, hier in Form eines MOSFETs, in der Ausnehmung 2-3 aufgenommen werden kann, wie dies in Figur 3 für den Havariefall dargestellt ist.

Das Heizelement 4, hier in Form des MOSFETs, weist auf der Oberseite und dem ersten Kontaktelement 2-1 zugewandt einen Sourceanschluss 4-1 und auf der Unterseite und dem zweiten Kontaktelement 2-2 zugewandt einen Drainanschluss 4-2 auf. Der Drainanschluss 4-2 ist in dieser Ausführungsform elektrisch direkt mit dem zweiten Kontaktelement 2-2 verbunden. Auf Grund der räumlichen Beabstandung zwischen dem ersten Kontaktelement 2-1 und dem zweiten Kontaktelement 2-2 ist zur Kontaktierung des Sourceanschlusses 4-1 des dem Heizelement 4 zu Grunde liegenden MOSFETs mit dem ersten Kontaktelement 4-1 ein Sourcebonddraht 2-4 ausgebildet.

Beim Vorliegen eines Havariefalls, zum Beispiel bei einem Unfall oder dergleichen, wird der dem Heizelement 4 zu Grunde liegenden MOSFET über einen hier nicht dargestellten Gateanschluss derart angesteuert, dass über Nutzung des elektrischen Kontakts des MOSFETs mit dem ersten und dem zweiten Kontaktelement 2-1, 2-2 ein erhöhter elektrischer Strom als Heizstrom fließt, so dass der MOSFET als solcher letztlich als Heizelement 4 fungiert und die thermische Zersetzung des Opfermaterials 3 bewirkt.

In Figur 3 ist das Opfermaterial 3 thermisch zersetzt, mithin die Barriere zwischen dem ersten und dem zweiten Kontaktelement 2-1, 2-2 verschwunden, so dass die Kontaktelemente 2, 1, 2-2 sich mit den einander zugewandten Stirnseiten berühren und so den Kurzschluss des erfindungsgemäßen Kurzschlussschalters 1 bewirken, wobei in der Ausnehmung 2-3 nunmehr das Heizelement 4 in Form des MOSFETs aufgenommen ist.

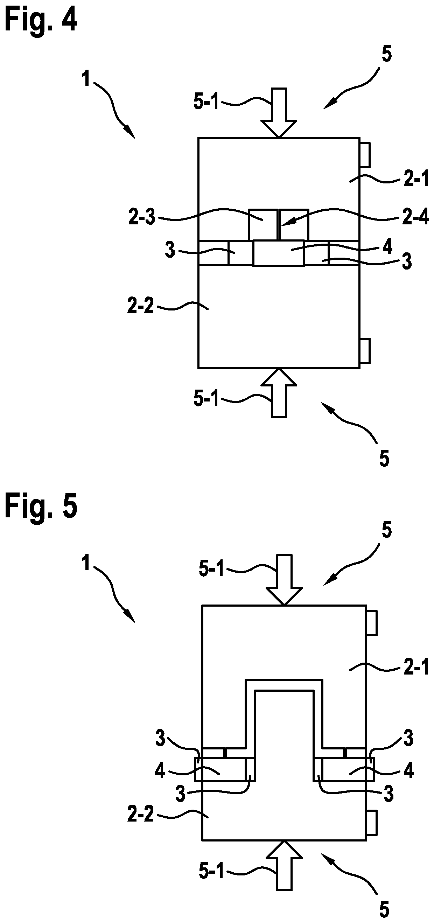

Bei der Ausführungsform des erfindungsgemäßen Kurzschlussschalters 1 gemäß Figur 4 ist das Opfermaterial 3 nur teilweise im Zwischenraum zwischen den ersten und zweiten Kontaktelementen 2-1 und 2-2 ausgebildet, fungiert aber weiterhin als Barriere zwischen den Kontaktelementen 2-1, 2-2, um im Normalfall ein Zusammenrücken der Kontaktelemente 2-1 und 2-2 auf Grund der Kräfte 5-1 der Vorspanneinrichtung 5 zu verhindern. Das bedeutet, dass bei dieser Ausführungsform die Menge an thermisch zu zersetzendem Material, also an Opfermaterial 3 verringert ist. Dadurch ist das für das thermische Zersetzen aufzubringende thermische Budget verringert. Der erfindungsgemäße Kurzschlussschalter 1 kann dadurch schneller ansprechen oder alternativ mit einer geringeren Leistung und damit weiter verringerter Baugröße für den MOSFET ausgelegt werden.

Bei der Ausführungsform des erfindungsgemäßen Kurzschlussschalters 1 gemäß Figur 5 befindet sich das Opfermaterial 3 ausschließlich an den Seiten des MOSFETs als Heizelement 4, dadurch wird die thermisch zu zersetzende Menge an Opfermaterial 3 weiter verringert.

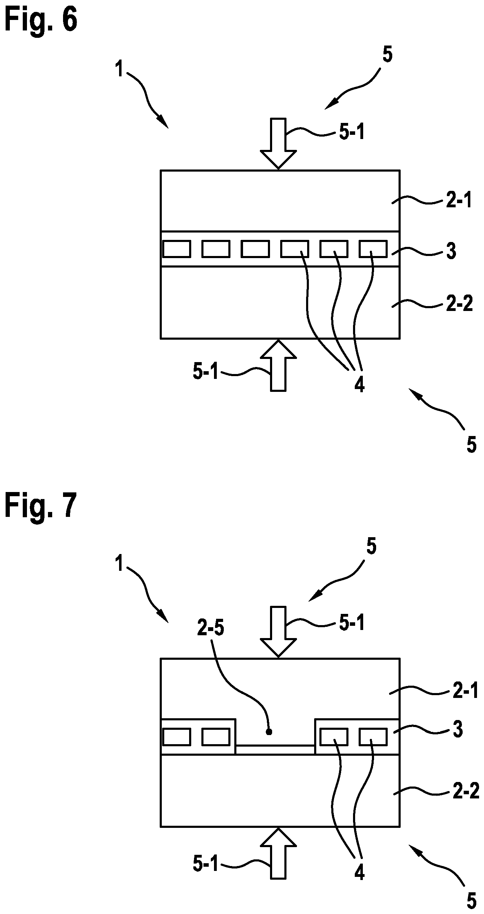

Bei den Ausführungsformen gemäß den Figuren 6 und 7 wird das jeweils vorgesehene Heizelement 4 durch entsprechende metallische Elemente realisiert, zum Beispiel in Form von Heizdrähten, Heizwendeln, Heizspiralen oder dergleichen. Das Heizelement 4 befindet sich, im Opfermaterial 3 eingebettet, im Zwischenbereich zwischen dem ersten und dem zweiten Kontaktelement 2-1 bzw. 2-2 und fungiert im Zusammenwirken mit dem Opfermaterial 3 als Barriere, um den Kräften 5-1 die Vorspanneinrichtung 5 entgegenzuwirken.

Durch Betätigung des Heizelements 4 wird das Opfermaterial 3 thermisch zersetzt, wodurch die Kräfte 5-1 der Vorspanneinrichtung 5 wirksam werden und die Kontaktelemente 2-1, 2-2 gegeneinander gedrückt werden. Durch Bewegung der Kontaktelemente 2-1, 2-2 aufeinander zu findet - vermittelt über die elektrische Leitfähigkeit der dann eingeklemmten elektrisch leitfähigen Komponenten des Heizelements 4 - ein nur mittelbarer elektrischer Kontakt zwischen den Kontaktelementen 2-1 und 2-2 statt. Auf Grund der elektrischen Leitfähigkeit der Komponenten des Heizelements 4 ist dies jedoch für die Kurzschlusswirkung dieser Ausführungsformen des erfindungsgemäßen Kurzschlussschalters 1 ausreichend.

Bei der Ausführungsform gemäß Figur 7 erfolgt zusätzlich noch ein Kontakt der ersten und zweiten Kontaktelemente 2-1 und 2-2 in direkter Weise, nämlich über die Ausstülpung oder den Vorsprung 2-5 des hier oben dargestellten ersten Kontaktelements 2-1 an dessen Unterseite, welche dem zweiten Kontaktelement 2-2 zugewandt ist.

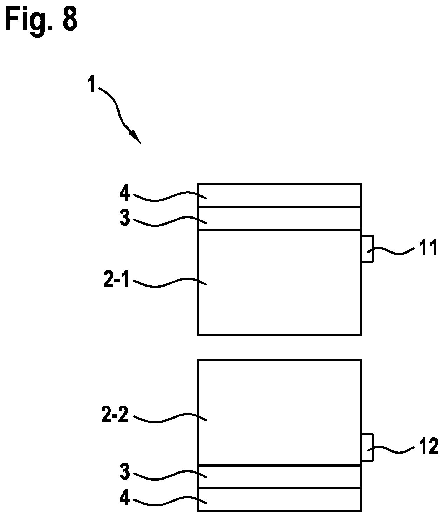

Bei der Ausführungsform des erfindungsgemäßen Kurzschlussschalters 1 gemäß Figur 8 wird die Bewegung der ersten und zweiten Kontaktelemente 2-1 und 2-2 nicht durch eine Vorspanneinrichtung 5 - wie in den Ausführungsformen gemäß den Figuren 2 bis 7 - erzwungen. Vielmehr wird bei der Ausführungsform gemäß Figur 8 nach dem Rückstoßprinzip vorgegangen, indem an den Seiten oder Flächen des ersten und des zweiten Kontaktelement 2-1 und 2-2, welche vom jeweils anderen Kontaktelement 2-2 bzw. 2-1 abgewandt sind, ein jeweiliger Anteil des Opfermaterials 3 angebracht und mit einem entsprechenden Heizelement 4 verbunden ist. In diesem Fall muss das Opfermaterial 3 nach Art eines Explosivstoffes fungieren, so dass sich im Havariefall - durch das jeweilige Heizelement 4 oder einen anderen Zündmechanismus initiiert - das Opfermaterial 3 explosionsartig thermisch zersetzt und auf Grund des Rückstoßes die Kontaktelemente 2-1 und 2-2 aufeinander zu bewegt und miteinander in Kontakt bringt.

Aufgrund des irreversiblen Charakters des thermisch zersetzten Zustands des Opfermaterials 3 wirken die vorgestellten Ausführungsformen des erfindungsgemäßen Kurzschlussschalters 1 als Einmalschalter.

Diese und weitere Merkmale und Eigenschaften der vorliegenden Erfindung werden an Hand der folgenden Darlegungen weiter erläutert:
Die vorliegende Erfindung betrifft insbesondere elektrisch und/oder thermisch aktivierbare und/oder aktivierte Einmalschalter 1 mit geringem Widerstand unter Verwendung von thermisch zersetzbaren Polymeren sowie deren Anwendung bei Batteriezellen 10 oder daraus aufgebauten Batteriemodulen und dergleichen.

Die Erfindung beschreibt auch einen Aufbau und eine Betriebsstrategie für einen Einmalschalter 1 bei Verwendung als eine oder in einer Schnellentladevorrichtung 30, beispielsweise für Lithiumionenbatteriezellen und für daraus aufgebaute Module.

Der vorgeschlagene Einmalschalter 1 besteht zum Beispiel aus zwei elektrisch gut leitfähigen Elektroden als ersten und zweiten Kontaktelementen 2-1 und 2-2, welche im Normalbetrieb durch eine Schicht eines Opfermaterials 3 und zum Beispiel aus einem thermisch zersetzbaren Polymer (thermally decomposable polymer - TDP) getrennt sind.

Bei Aktivierung des Schalters 1, also in einem Kurzschlussfall oder dergleichen, zersetzt sich das TDP-Material 3 und bringt die beiden Elektroden 2-1, 2-2 in elektrischen Kontakt miteinander. Es entsteht dadurch eine elektrisch sehr gut leitende Verbindung zwischen den Elektroden, die hohe Stromstärken tragen kann.

Üblicherweise werden Zellen 10 oder daraus aufgebaute Module von Lithiumionenbatterien zur Qualifizierung einem so genannten Nageltest unterzogen. Dabei wird ein Metallnagel in die Zelle gerammt. Mit einem derartigen Test wird zum Beispiel ein Unfall in einem Fahrzeug simuliert.

Eine Batteriezelle 10 besteht diesen Nageltest, sofern sie unter dem Test nicht explodiert. Zellen 10 mit moderner Zellchemie und/oder hohen Leistungsdichten bestehen auf Grund der Aggressivität der Zellchemie diesen Nageltest oft nicht oder nicht ausreichend und können deshalb für eine Anwendung und für den Vertrieb nicht zugelassen werden.

Damit die Zelle 10 den Nageltest trotz aggressiver Zellchemie bestehen kann, wird nach dem Stand der Technik ein Schutzmechanismus aktiviert, der die Zelle 10 während der Interaktion mit dem Nagel kurzschließt und die Zellchemie soweit degradiert, dass eine Explosion vermieden wird.

Folgende Anforderungen sind an einen derartigen Kurzschlussmechanismus und eine zu Grunde liegende Kurzschlusselektronik zu stellen:
(1) Eine Detektion des Kurzschlusses muss möglich sein, ist aber nicht Kernaspekt der vorliegenden Erfindung.
(2) Es muss im Nichtfehlerfall, also zum Beispiel im Normalbetrieb, eine elektrische Isolation vorliegen, zum Beispiel mit einem Sperren der Batteriespannung U_{bat} in einem Bereich von etwa 4 V bis etwa 5 V.
(3) Im Fehlerfall oder Kurzschlussfall muss ein möglichst geringer Widerstand R_{ST} vorliegen, zum Beispiel in einem Bereich unterhalb von 10⁻⁴ Ω.
(4) Es muss im Fehlerfall oder Kurzschlussfall eine Stromtragfähigkeit Imax zum Beispiel im Bereich von etwa 5 kA für eine Zeitspanne tmax von zum Beispiel etwa 30 s gewährleistet sein.
(5) Die Maßnahmen dürfen höchstens geringe Kosten verursachen.

Herkömmlicherweise werden die Aspekte (2) bis (4) dadurch berücksichtigt, dass mehrere parallel geschaltete Si-MOSFETs verwendet werden, welche die Batteriespannung U_{bat} sperren und im Kurzschlussfall durch ihre Parallelschaltung einen geringen Widerstand bereitstellen.

Hierzu werden zum Beispiel Transistoren benutzt, die jeweils einen Widerstand R im Bereich von etwa 0,34 mΩ bei einer Chipfläche von rund 40 mm² aufweisen.

Auf Grund der DC-Stromtragfähigkeit der Transistoren von zum Beispiel 341 A werden 20 Transistoren parallel geschalten, welche dadurch einen Gesamtwiderstand R von etwa 0,017 mΩ liefern und eine Gesamtchipfläche A von etwa 8 cm² benötigen, wodurch ein Großteil der Kosten für die herkömmliche Kurzschlusselektronik verursacht wird.

Es ist eine Aufgabe der vorliegenden Erfindung, einen Einmalschalter 1 zu schaffen, welcher die oben beschriebenen Anforderungen (2) bis (5) auf einfache Weise und möglichst zuverlässig erfüllt.

Ein Kern der Erfindung sind die Bildung einer Struktur für einen Einmalschalter 1, sowie eine Betriebsstrategie, um den oben erläuterten Kurzschlussfall möglichst einfach und zuverlässig realisieren und handhaben zu können.

### Aufbau

Eine Ausführungsform des erfindungsgemäßen Einmalschalters 1 ist in Figur 2 in einer Querschnittsansicht dargestellt.

Er besteht aus zwei hochleitfähigen Elektroden als ersten und zweiten Kontaktelementen 2-1 bzw. 2-2, nämlich einer Anode und einer Kathode, beispielsweise aus Kupfer (Cu) oder Aluminium (AI). Die Elektroden 2-1, 2-2 können beispielsweise stabförmig und mit Durchmessern im Bereich von etwa 1 mm bis etwa 2 cm ausgebildet sein.

Die Elektroden 2-1, 2-2 befinden sich im Normalzustand, also im Nichtfehlerfall, nicht in Kontakt miteinander, sondern sind z.B. elektrisch durch eine Schicht eines TDP-Materials als Opfermaterial 3 voneinander getrennt. Die TDP-Schicht 3 kann dabei Schichtdicken im Bereich von etwa 1 µm bis etwa 100 µm aufweisen.

Die TDP-Schicht 3 verhält sich insbesondere wie ein Isolator. Parallel zur TDP-Schicht 3 und in thermischem Kontakt dazu wird ein Heizelement 4, zum Beispiel in Form eines elektronischen Schalters, beispielweise ein Si-MOSFET angeordnet.

Im Fall eines Si-MOSFETs als Heizelement 4 kann dieser zum Beispiel drainseitig mit der Anode 2-2 und sourceseitig mit der Kathode 2-1 verbunden werden. Das geschieht beispielsweise durch Löten, z.B. drainseitig, oder Bonden, z.B. sourceseitig. Zusätzlich zu den Drain- und Sourceanschlüssen 4-2 bzw. 4-1 werden noch die Steuerelektrode oder der Gateanschluss des MOSFETs - welcher in der Figur nicht gezeigt ist - mit einer Detektionselektronik einer zu Grunde liegenden Kurzschlusselektronik verbunden.

Nach dem Anschluss des elektronischen Schalters als Heizelement 4 wird der Einmalschalter 1 zum Beispiel so durch Einbetten in eine Kapselung verpackt, dass auf beide Elektroden 2-1, 2-2, nämlich auf die Anode und die Kathode, eine Kraft 5-1 wirkt, welche die Elektroden 2-1, 2-2 zusammendrückt. Das kann beispielweise durch eine zusätzliche Feder 5 in der Verpackung realisiert werden.

### Betriebsstrategie

### (A) Normalbetrieb:

Im Normalbetrieb kann der oben beschriebene Einmalschalter 1 die in Figur 2 dargestellte Anordnung aufweisen. Die Steuerspannung des elektronischen Schalters als Heizelement 4, beispielsweise eines MOSFETs, wird so gewählt, dass dieser einen elektrisch nicht leitenden Zustand bereitstellt. Somit fließt nur ein geringer Leckstrom durch den MOSFET und die parallel geschaltete TDP-Schicht 3.

Damit ist die oben beschriebene Anforderung (2) erfindungsgemäß erfüllt.

### (B) Kurzschlussfall:

Im Fall der Detektion des Eindringens eines Nagels bei einem Nageltest wird die Steuerspannung des MOSFETs als Heizelement 4 so gewählt, dass dieser einen vergleichsweise geringen Widerstand Rₑᵣ zum Beispiel im Bereich von etwa 10⁻³ Ω bis etwa 1 Ω liefert.

Der Stromfluss durch den MOSFET führt zu seiner Erwärmung. Die erzeugte Wärmemenge wird dazu verwendet, das TDP-Material 3 thermisch zu zersetzen.

Der Widerstand des MOSFETs als Heizelement 4 muss dazu so gering gewählt werden, dass die Temperatur für die Zersetzung des TDP-Materials 3 erreicht wird und die Zersetzungszeitspanne t_{zer} geringer ist als tₘₐₓ.

Gleichzeitig muss der Widerstand des MOSFETs so hoch gewählt werden, dass seine Funktion für die benötigte Zersetzungszeitspanne t_{zer} gewährleistet ist.

Nach der Zersetzung des TDP-Materials 3 werden die beiden Elektroden als Kontaktelemente 2-1, 2-2, nämlich die Anode und die Kathode, bei Abwesenheit des TDP-Materials 3 nach dessen thermischer Zersetzung durch die Vorspannkraft 5-1 aufeinander zu bewegt und aneinander gedrückt oder gepresst, wie dies in Figur 3 dargestellt ist.

Es stellen sich ein vergleichsweise geringer Widerstand und eine vergleichsweise hohe Stromtragfähigkeit ein, womit die oben beschriebenen Anforderungen (3) und (4) erfüllt sind.

Im Gegensatz zum herkömmlichen Vorgehen ist der Widerstand des erfindungsgemäßen elektrischen Schalters im Sinne eines Einmalschalters 1 wesentlich größer zu wählen als der Widerstand des elektronischen Schalters gemäß Stand der Technik, das heißt es gilt Rₑᵣ >> R_{ST}.

Dadurch können elektronische Schalter wesentlich kleiner dimensioniert, zum Beispiel 10-fach bis 1000-fach, und Größenordnungen
an Chipfläche und damit Kosten eingespart werden.

### Weitere Ausführungsformen

Weitere Ausführungsformen sind in den Figuren 4 bis 8 dargestellt.

Figur 4 zeigt den oben beschriebenen erfindungsgemäßen Einmalschalter 1, bei dem das thermisch zersetzbare Polymermaterial 3 nur teileweise zwischen der Anode 2-2 und der Kathode 2-1 aufgebracht ist.

Dabei ist von Vorteil, dass sich eine vergleichsweise schnelle Zersetzung ergibt. Nachteilig kann eine vergleichsweise schlechtere elektrische Isolation sein.

Figur 5 zeigt den oben beschriebenen erfindungsgemäßen Einmalschalter 1, bei dem das thermisch zersetzbare Polymermaterial 3 an einer Seite des MOSFETs des Heizelements 4 aufgebracht ist.

Figur 6 zeigt den oben beschriebenen erfindungsgemäßen Einmalschalter 1, bei welchem der MOSFET durch ein Heizelement 4 ersetzt ist, welches in das Volumen des thermisch zersetzbaren Polymermaterials 3 eingebettet ist.

Figur 7 zeigt den oben beschriebenen erfindungsgemäßen Einmalschalter 1, bei welchem zusätzlich noch weitere Heizelemente 4 im Volumen des thermisch zersetzbaren Polymermaterials 3 eingebracht sind. Diese können aus Kupfer bestehen und im Kurzschlussfall durch den MOSFET bestromt werden. Dadurch erwärmen sie sich und sorgen für die Zersetzung des thermisch zersetzbaren Polymermaterials 3.

Der oder die Oberflächenoffsets der zentralen Kontaktflächen werden vorteilhafterweise so gewählt, dass der Spaltabstand kleiner ist als die Dicken der TDP-Schichten 3 mit dem eingebetteten Heizelement 4. Dieses Design hat den Vorteil, dass die beiden Kontaktflächen während des Verdampfens des TDP-Materials 3 schneller miteinander in Kontakt kommen - das TDP-Material 3 muss nicht vollständig verdampft sein, um den Kontakt zu schließen - und damit einen niederohmigen Kurzschluss bilden.

Die periphere Anordnung der TDP-Zersetzungsschicht 3 ermöglicht ein erleichtertes Abgehen der Zersetzungsgase.

In einer weiteren Ausführungsform gemäß Figur 8 kann das thermisch zersetzbare Polymer 3 einen explosiven Stoff bilden oder durch einen explosiven Stoff ersetzt sein.

Eine derartige Struktur mit einem explosiven Material 3 bei einem erfindungsgemäßen Einmalschalter 1 ist in Figur 8 schematisch dargestellt. Im Kurzschlussfall werden die Bereiche mit explosivem Stoff 3 durch eine Auslöseelektronik gezündet und schießen die vorher elektrisch getrennten Elektroden 2-1, 2-2 aufeinander. Dadurch wird ein elektrischer Kontakt zwischen den Elektroden 2-1, 2-2 hergestellt.

Eine Einsatzmöglichkeit der Erfindung ist eine Schnellentladeeinrichtung 30 - auch als Fast-Discharge-Device bezeichnet und in Figur 1 dargestellt - zur sicheren Deaktivierung eine Zellchemie in Lithiumionenbatterien. Eine derartige Einrichtung 30 ist notwendig, um Batteriezellen 10 oder Batteriemodule mit moderner und aggressiver Zellchemie im Fehlerfall, zum Beispiel beim Eindringen eines Nagels beim Nageltest, vor Explosion zu schützen.

## Patentansprüche

1. Kurzschlussschalter (1), insbesondere als Entladeschalter (32) einer Schnellentladeeinheit (30) einer Batteriezelle (10), mit:
- einem ersten Kontaktelement (2-1) und einem zweiten Kontaktelement (2-2), welche so relativ zueinander beweglich ausgebildet sind, dass durch sie ein erster Zustand voneinander elektrisch getrennt und ein zweiter Zustand in elektrischem Kontakt miteinander einnehmbar ist,
- einem Opfermaterial (3), welches unter Wärmeeinwirkung thermisch zersetzbar ist,
- einem Heizelement (4), welches in thermischem Kontakt mit dem Opfermaterial (3) ausgebildet ist,
wobei das Opfermaterial (3) so ausgebildet ist, dass es im Übergang von einem thermisch nicht zersetzten Zustand zu einem thermisch zersetzten Zustand einen elektrischen Kontakt zwischen dem ersten und dem zweiten Kontaktelement (2-1, 2-2) durch deren Bewegung relativ zueinander bewirkt oder ermöglicht,
wobei das Opfermaterial (3)
- mit oder aus einem Explosivstoff gebildet ist und
- so an einer Fläche mindestens eines der Kontaktelemente (2-1, 2-2) ausgebildet ist, welche vom jeweils anderen Kontaktelement (2-2, 2-1) abgewandt ist, dass beim Übergang vom thermisch nicht zersetzten Zustand des Opfermaterials (3) zum thermisch zersetzten Zustand die Kontaktelemente (2-1, 2-2) durch Rückstoß relativ aufeinander zu bewegt und elektrisch kontaktiert werden.

2. Kurzschlussschalter (1) nach Anspruch 1,
bei welchem das Opfermaterial (3) mit oder aus einem thermisch zersetzbaren Polymer gebildet ist, insbesondere einem Polyolefin.

3. Kurzschlussschalter (1) nach einem der vorangehenden Ansprüche, bei welchem das Opfermaterial (3) zumindest im thermisch nicht zersetzten Zustand elektrisch isolierend oder höchstens elektrisch schlecht leitend ist.

4. Kurzschlussschalter (1) nach einem der vorangehenden Ansprüche, bei welchem die Kontaktelemente (2-1, 2-2) eingerichtet sind, beim Übergang des Opfermaterials (3) in den thermisch zersetzten Zustand einen mittelbaren oder einen unmittelbaren mechanischen Kontakt miteinander auszubilden, um dadurch den elektrischen Kontakt zu bewirken.

5. Kurzschlussschalter (1) nach einem der vorangehenden Ansprüche, bei welchem:
- das Opfermaterial (3) im thermisch nicht zersetzten Zustand eine Barriere zwischen dem ersten und dem zweiten Kontaktelement (2-1, 2-2) bildet und
- eine Vorspanneinrichtung (5) ausgebildet ist, welche zur Beaufschlagung des ersten Kontaktelements (2-1) und/oder des zweiten Kontaktelements (2-2) mit einer Kraft (5-1) in Richtung auf das jeweils andere Kontaktelement (2-1, 2-2) zu eingerichtet ist, insbesondere mit einem oder mehreren Federelementen.

6. Kurzschlussschalter (1) nach einem der vorangehenden Ansprüche, bei welchem das Heizelement (4) einen MOSFET aufweist oder von einem MOSFET gebildet wird, dessen Sourceanschluss (4-1) mit einem der Kontaktelemente (2-1, 2-2) und dessen Drainanschluss (4-2) mit dem anderen der Kontaktelemente (2-2, 2-1) elektrisch kontaktiert ist.

7. Kurzschlussschalter (1) nach einem der Ansprüche 1 bis 6,
bei welchem das Heizelement (4) ein elektrisch leitendes Element aufweist oder von einem solchen Element gebildet wird, insbesondere als metallisches Heizelement, welches in einem Zwischenraum zwischen den Kontaktelementen (2-1, 2-2) angeordnet ist und welches insbesondere im thermisch nicht zersetzten Zustand des Opfermaterials (3) im Opfermaterial (3) eingebettet ist.

8. Schnellentladeeinheit (30) für eine Batteriezelle (10),
- welche als Entladeschalter (32) einen Kurzschlussschalter (1) nach einem der Ansprüche 1 bis 7 aufweist,
- wobei der Entladeschalter (32) eingerichtet ist, über erste und zweite Entladeleitungen (33, 34) mit ersten und zweiten Anschlüssen (11, 12) einer Batteriezelle (10) verbunden zu werden.

9. Batteriezelle (10),
mit einem ersten Anschluss (11) und einem zweiten Anschluss (12), zwischen denen eine Schnellentladeeinheit (30) nach Anspruch 8 in elektrischem Kontakt ausgebildet ist.

10. Arbeitsvorrichtung und insbesondere Fahrzeug, mit
- einem Aggregat zum Ausführen eines Arbeitsvorgangs, insbesondere ein Antrieb, und
- mindestens einer Batteriezelle (10), welche zur Versorgung des Aggregats zu dessen Betrieb mit elektrischer Energie und gemäß Anspruch 9 ausgebildet ist.

## Claims

1. Short-circuiting switch (1), in particular as discharge switch (32) of a fast discharge unit (30) of a battery cell (10), comprising:
- a first contact element (2-1) and a second contact element (2-2), which are embodied so as to be movable relative to one another such that they are able to adopt a first state of being electrically isolated from one another and a second state of being in electrical contact with one another,
- a sacrificial material (3), which is thermally decomposable under the action of heat,
- a heating element (4), which is embodied in thermal contact with the sacrificial material (3),
wherein the sacrificial material (3) is embodied such that in the transition from a thermally non-decomposed state to a thermally decomposed state, said sacrificial material brings about or enables an electrical contact between the first and second contact elements (2-1, 2-2) as a result of the movement thereof relative to one another,
wherein the sacrificial material (3)
- is formed with or from an explosive substance and
- is embodied on a surface of at least one of the contact elements (2-1, 2-2), said surface facing away from the respective other contact element (2-2, 2-1), such that during the transition from the thermally non-decomposed state of the sacrificial material (3) to the thermally decomposed state, the contact elements (2-1, 2-2), as a result of recoil, are moved relatively towards one another and electrically contacted.

2. Short-circuiting switch (1) according to Claim 1, wherein the sacrificial material (3) is formed with or from a thermally decomposable polymer, in particular a polyolefin.

3. Short-circuiting switch (1) according to either of the preceding claims,
wherein the sacrificial material (3), at least in the thermally non-decomposed state, is electrically insulating or at most poorly electrically conducting.

4. Short-circuiting switch (1) according to any of the preceding claims,
wherein the contact elements (2-1, 2-2) are configured, during the transition of the sacrificial material (3) to the thermally decomposed state, to form an indirect or a direct mechanical contact with one another in order thereby to bring about the electrical contact.

5. Short-circuiting switch (1) according to any of the preceding claims,
wherein:
- the sacrificial material (3), in the thermally non-decomposed state, forms a barrier between the first and second contact elements (2-1, 2-2), and
- a pretensioning device (5) is embodied, which is configured for applying to the first contact element (2-1) and/or the second contact element (2-2) a force (5-1) in the direction of the respective other contact element (2-1, 2-2), in particular with one or a plurality of spring elements.

6. Short-circuiting switch (1) according to any of the preceding claims,
wherein the heating element (4) comprises a MOSFET or is formed by a MOSFET, the source terminal (4-1) of which is electrically contacted with one of the contact elements (2-1, 2-2) and the drain terminal (4-2) of which is electrically contacted with the other of the contact elements (2-2, 2-1).

7. Short-circuiting switch (1) according to any of Claims 1 to 6,
wherein the heating element (4) comprises an electrically conducting element or is formed by such an element, in particular as a metallic heating element, which is arranged in an interspace between the contact elements (2-1, 2-2) and which is embedded in the sacrificial material (3) in particular in the thermally non-decomposed state of the sacrificial material (3).

8. Fast discharge unit (30) for a battery cell (10),
- which comprises a short-circuiting switch (1) according to any of Claims 1 to 7 as discharge switch (32),
- wherein the discharge switch (32) is configured to be connected to first and second terminals (11, 12) of a battery cell (10) via first and second discharge lines (33, 34).

9. Battery cell (10),
comprising a first terminal (11) and a second terminal (12), between which a fast discharge unit (30) according to Claim 8 is embodied in electrical contact.

10. Working apparatus and in particular vehicle, comprising
- a unit for carrying out a work process, in particular a drive, and
- at least one battery cell (10) which is embodied for supplying the unit for the operation thereof with electrical energy and according to Claim 9.

## Revendications

1. Commutateur de court-circuit (1), en particulier sous la forme d'un commutateur de décharge (32) d'une unité de décharge rapide (30) d'un élément de batterie (10), comportant :
- un premier élément de contact (2-1) et un second élément de contact (2-2) qui sont mobiles l'un par rapport à l'autre de telle sorte qu'un premier état les sépare électriquement l'un de l'autre et qu'un second état le mette en contact électrique l'un avec l'autre,
- un matériau sacrificiel (3) qui est thermiquement décomposable sous l'action de la chaleur,
- un élément chauffant (4) qui est réalisé en contact thermique avec le matériau sacrificiel (3),
dans lequel le matériau sacrificiel (3) est réalisé de manière à ce que, lors du passage d'un état thermiquement non décomposé à un état thermiquement décomposé, il provoque ou permet un contact électrique entre les premier et second éléments de contact (2-1, 2-2) par leur mouvement relatif l'un par rapport à l'autre,
dans lequel le matériau sacrificiel (3)
- est formé avec ou à partir d'un explosif, et
- est réalisé sur une surface d'au moins l'un des éléments de contact (2-1, 2-2) qui est tournée à l'opposé de l'autre élément de contact respectif (2-2, 2-1) de manière à ce que, lors du passage de l'état thermiquement non décomposé du matériau sacrificiel (3) à l'état thermiquement décomposé, les éléments de contact (2-1, 2-2) soient déplacés les uns par rapport aux autres du fait du recul et soient mis en contact électrique.

2. Commutateur de court-circuit (1) selon la revendication 1,
dans lequel le matériau sacrificiel (3) est formé avec ou à partir d'un polymère thermiquement décomposable, en particulier une polyoléfine.

3. Commutateur de court-circuit (1) selon l'une des revendications précédentes,
dans lequel le matériau sacrificiel (3) est électriquement isolant au moins à l'état non décomposé thermiquement ou au plus faiblement électriquement conducteur.

4. Commutateur de court-circuit (1) selon l'une des revendications précédentes,
dans lequel les éléments de contact (2-1, 2-2) sont conçus pour établir un contact mécanique direct ou indirect les uns avec les autres lorsque le matériau sacrificiel (3) passe dans l'état de thermiquement décomposé, afin de provoquer ainsi le contact électrique.

5. Commutateur de court-circuit (1) selon l'une des revendications précédentes, dans lequel :
- le matériau sacrificiel (3) à l'état non thermiquement décomposé forme une barrière entre les premier et second éléments de contact (2-1, 2-2), et
- un dispositif de précontrainte (5) devant être conçu pour appliquer une force (5-1) en direction de l'autre élément de contact respectif (2-1, 2-2) au premier élément de contact (2-1) et/ou au second élément de contact (2-2) est réalisé, en particulier avec un ou plusieurs éléments à ressort.

6. Commutateur de court-circuit (1) selon l'une des revendications précédentes,
dans lequel l'élément chauffant (4) comporte un MOSFET ou est formé par un MOSFET dont la borne de source (4-1) est en contact électrique avec l'un des éléments de contact (2-1, 2-2) et dont la borne de drain (4-2) est en contact électrique avec l'autre des éléments de contact (2-2, 2-1).

7. Commutateur de court-circuit (1) selon l'une des revendications 1 à 6,
dans lequel l'élément chauffant (4) comporte un élément électriquement conducteur ou est formé par un tel élément, en particulier sous la forme d'un élément chauffant métallique, qui est disposé dans un espace intermédiaire entre les éléments de contact (2-1, 2-2) et qui est intégré dans le matériau sacrificiel (3), en particulier à l'état non thermiquement décomposé du matériau sacrificiel (3).

8. Unité de décharge rapide (30) pour un élément de batterie (10),
- qui comporte en tant que commutateur de décharge (32) un commutateur de court-circuit (1) selon l'une des revendications 1 à 7,
- dans lequel le commutateur de décharge (32) est conçu pour être connecté par l'intermédiaire de première et seconde lignes de décharge (33, 34) à des première et seconde bornes (11, 12) d'un élément de batterie (10).

9. Élément de batterie (10),
comportant une première borne (11) et une seconde borne (12) entre lesquelles une unité de décharge rapide (30) selon la revendication 8 est réalisée en contact électrique.

10. Dispositif de travail, en particulier véhicule, comportant
- un groupe destiné à effectuer une opération, en particulier un entraînement, et
- au moins un élément de batterie (10) qui est conçu pour alimenter en énergie électrique ledit groupe pour son fonctionnement et selon la revendication 9.
